# EUROPEAN PATENT APPLICATION

(11) **EP 4 654 727 A1**
(43) Date of publication of application: **26.11.2025**
(21) Application number: 24177970.1
(22) Date of filing: 24.05.2024
(51) Int. Cl.: H04W 72/566, H04W 84/12

(54) **PROVIDING A PRIORITY-BASED DETERMINISTIC CHANNEL ACCESS IN A WIRELESS LOCAL AREA NETWORK**

(71) Applicant: Siemens Aktiengesellschaft, 80333 München (DE)
(72) Inventor: Schneider, Ben, 85748 Garching (DE); Bahr, Michael, 81827 München (DE); Richerzhagen, Björn, 85055 Ingolstadt (DE)
(74) Representative: Siemens Patent Attorneys

(57) **Abstract**

The present embodiments relate to a method and access point for providing a priority-based deterministic channel access in a wireless local area network.

According to the invention, trigger frames or scheduled trigger frames, in particular trigger frames as used in OFDMA-based Wi-Fi are used to enable time sensitive behavior by combining a schedule of temporally ordered transmission opportunities for transmitting the data with a - strict or non-strict - priority scheduling to further improve the performance of aperiodic traffic in Wi-Fi. The present invention advantageously provides resource allocation mechanism guaranteeing worst-case latency bounds in a converged industrial network environment. The resource allocation or resource scheduling advantageously guarantees that specific devices are allocated with enough resources to transmit traffic according to their strict timing requirements while considering periodic and aperiodic deterministic traffic.

## Description

*Independent of the grammatical term usage, individuals with male, female or other gender identities are included within the term.*

### Technical Field

The disclosed embodiments generally relate to the field of industrial wireless communication. Specifically, the disclosed embodiments relate to an industrial wireless communication capable of at least partially supporting deterministic data traffic.

### Background Art

Industrial communication protocols are implemented to manage industrial process control operations associated with field devices and other types of process equipment located in industrial process control environments. Wired communication has traditionally been the preferred choice for industrial automation, mainly due to apply deterministic protocols for the exchange of time-critical process data.

Wireless communication technologies have opened up new possibilities. Wireless communication technologies such as Wi-Fi - a family of wireless network protocols based on IEEE 802.11 standards commonly used for local area networking of devices - have also been on the rise in the industrial sector for some time, as furtherly developed wireless protocols are beginning to enable deterministic operation needed in the industrial domain. Conventional Wi-Fi, however, is primarily designed for consumer and office environments and accordingly does not meet the requirements of industrial automation applications.

A further developed wireless protocol also referred to as Deterministic Wi-Fi is characterized by predictable and reliable communication with precise timing, offers numerous benefits such as increased flexibility, scalability, and reduced installation costs compared to wired deterministic networking solutions. Recent advances in IEEE 802.11 standardization lay the foundations for a broad support of time-sensitive applications in Wi-Fi. In particular, advanced techniques such as Orthogonal Frequency Division Multiple Access (OFDMA) and MultiLink Operation (MLO) may be promising extensions for industrial applications.

At present, traditional Wi-Fi protocols still struggle to provide deterministic performance due to unpredictable access delays caused by known contention-based mechanisms. In order to meet this challenge, advanced protocols and scheduling mechanisms need to be developed. These protocols are expected to enable time-critical applications to deterministically reserve and access the wireless medium, minimizing contention, and guaranteeing predictable communication. As a primary contribution towards minimizing a contention for gaining a deterministic channel access to a wireless network, the Applicant of the present proposal has disclosed a method and system for controlling access to a radio network as described in European Patent Application 23160772.2 - yet unpublished at the time of filing the present proposal - being incorporated herein by reference in its entirety. Having successfully gained channel access, the access point may initiate an OFDMA transmission and perform resource allocation.

Despite these advances, there is still a need in the art for supporting industrial applications by a resource allocation mechanism that guarantees worst-case latency bounds in a »converged« network environment - i.e., a network supporting different types of traffic including periodic and aperiodic traffic - using the same network infrastructure. Accordingly, there is a need in the art for a deterministic resource allocation mechanism being able to comply with a latency limit even in a converged network environment.

### Summary of the Invention

The present invention relates to a method for providing a priority-based deterministic channel access in a wireless local area network. The wireless network includes one or more access points and one or more stations. The access point is at least temporarily occupying channel access for an OFDMA (Orthogonal Frequency Division Multiple Access) transmission. The method includes the steps of:
- receiving a frame reporting an uplink requirement of data buffered by a station, the frame including one or more priority identifiers assigned to one or more portions of the data;
- allocating a schedule of resource units for transmitting the data, the allocation of resource units being prioritized according to the one or more priority identifiers; and;
- transmitting a trigger frame to at least one station to elicit at least one uplink data transmission by at least one scheduled resource unit.

The present invention is based on a recognition of a general requirement of industrial applications for deterministic and real-time capable communication. While there are already numerous protocols - collectively referred to as deterministic or time-sensitive network protocols - for wired communications that meet these requirements, present wireless communication protocols remain behind in offering deterministic or time-sensitive capabilities. Existing industrial wireless protocols of today, however, are generally not compliant with an IEEE 802.11 standard family of the Institute of Electrical and Electronics Engineers and thus proprietary solutions. Such existing industrial wireless protocols are usually based on pollingbased or TDMA-based (Time-Division Multiple Access) mechanisms with high implementation complexity.

In addition to a desired deterministic behavior tailored to periodic traffic, an industrial network also encounters other types of traffic including aperiodic or non-deterministic / best-effort traffic. A presence of one or more of these different traffic types within a network is also referred to as a converged network environment. Such converged network environment is required for supporting industrial applications.

According to the invention, trigger frames or scheduled trigger frames, in particular trigger frames as used in OFDMA-based Wi-Fi - a family of wireless network protocols based on IEEE 802.11 standards commonly used for local area networking of devices - are used to enable time sensitive behavior by combining a schedule of temporally ordered transmission opportunities for transmitting the data with a - strict or non-strict - priority scheduling to further improve the performance of aperiodic traffic in Wi-Fi .

The present invention advantageously provides resource allocation mechanism guaranteeing worst-case latency bounds in a converged network environment. The resource allocation or resource scheduling advantageously guarantees that specific devices are allocated with enough resources to transmit traffic according to their strict timing requirements while considering periodic and aperiodic deterministic traffic.

While known allocation schedules only allow an allocation of resource units to stations without imposing any further conditions - leaving it up to the stations to decide in which order uplink data transmissions are to be transmitted - the invention extends the control of the access point on which priority identifier or traffic type stations are allowed to transmit, thereby enabling the wireless local area network to support time-sensitive scheduling mechanisms.

### Description of Embodiments

Further possible embodiments are - by no means exhaustive - the subject of dependent claims.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1:: is a schematic diagram illustrating a scheduling mechanism in a temporal representation according to a single priority approach;
- FIG. 2:: is a schematic diagram illustrating a scheduling mechanism in a temporal representation according to combined priority approach;
- FIG. 3:: is a schematic diagram illustrating a combined priority approach scheduling mechanism which is configured with concrete temporal values for evaluation purposes;
- FIG. 4:: is a schematic diagram illustrating a respective dependency of a worst-case uplink latency time (abscissa) on the number of stations (plotted on the ordinate) in the case of an aperiodic priority (upper curve) and a periodic priority (lower curve) according to the combined priority approach;
- FIG. 5:: is a schematic diagram illustrating a trigger frame format including a plurality of trigger frame fields;
- FIG. 6:: is a schematic diagram illustrating a user info field format being a trigger frame field of a trigger frame format according to FIG. 5; and;
- FIG. 7:: is a schematic diagram illustrating a Trigger Dependent User Info subfield format being a subfield of a user info field format according to FIG. 6.

### Description of Examples

In recent times an Increasingly growing integration of automation systems has revolutionized industrial processes, enhancing productivity, efficiency and safety. While wired communication procotols such as TSN or Time-sensitive Networking have traditionally been a preferred choice for industrial automation, emerging wireless technologies, particularly Wi-Fi, have recently opened up new possibilities. Conventional Wi-Fi procols, however, are primarily designed to meet consumer and office requirments which means that they are usually not suitable for industrial automation use cases. A newly introduced protocol version Wi-Fi 6 (including Wi-Fi 6E) offers two major advantages.

A first advantage of Wi-Fi 6, compared to its protocol predecessors Wi-Fi 5, Wi-Fi 4, etc., is centralized coordination of resources by the access point using Orthogonal Frequency Division Multiple Access (OFDMA). The coordinating access point may allocate sub-channel resources - also referred to as Resource Units - more efficiently than earlier access points euqipped with Wi-Fi protocol predecessors. In order to allocate sub-channel resources, the coordinating access point may have to contend for access to a shared radio frequency spectrum prior to exclusively performing the allocation. A default channel access mechanism is known as Enhanced Distributed Channel Access or EDCA. EDCA provides contention-free access to the sub-channel frequencies for a period called a Transmit Opportunity or TXOP. A TXOP is a bounded time interval during which a station may send as many frames as possible, as long as the duration of the transmissions does not extend beyond the maximum duration of the TXOP. OFDMA access (OFDMA-RA) may be used as an uplink (UL) or downlink (DL) channel access mechanism for stations, where different stations contend for different OFDMA Ressource Units or OFDMA RU. OFDMA RU may be understood as portions or sub-channel frequencies of a communication channel bandwidth. Irrespective of whether a downlink (DL) or uplink (UL) OFDMA transmission may be scheduled, the first thing to happen in OFDMA is the access point winning contention against associated stations.

A second advantage of Wi-Fi 6 is a novel usage of a 6 GHz frequency band which may be used by Wi-Fi 6 capable devices and beyond, but is not available for pre-Wi-Fi 6 devices. This means that Wi-Fi devices using the 6 GHz band may be assumed supporting OFDMA.

These two advantages - a centralized coordination of resources by the access point using OFDMA and no backwards compatibility issue in the 6GHz band - are promising for making OFDMA-based Wi-Fi deterministic. Three major challenges in attaining a full-fledged deterministic Wi-Fi may have to be met:
- Deterministic Channel Access: For being able to guarantee worst-case channel access times for particular devices. One possible method based on Multi-User Enhanced Distributed Channel Access, MU EDCA, has been proposed in European Patent Application 23160772.2 - yet unpublished at the time of filing the present proposal - assigned to the applicant of the present proposal. Having successfully gained channel access, the access point may initiate an OFDMA transmission and perform resource allocation.
- Resource allocation / Scheduling: For being able to guarantee that particular devices are provided with adequate resources in order to transmit traffic according to strict timing requirements of the particular devices considering periodic and aperiodic deterministic traffic. A solution to this problem is proposed by the present invention.

The present embodiments propose a novel appraoach for allocating resource units or RU with two major steps:
- a schedule of temporally ordered transmission opportunities for transmitting the data may be determined. According to embodiments, this step may include a usage of trigger frames. According to further embodiments, this step may include receiving a trigger frame reporting an uplink requirement of data buffered by a station. According to embodiments, this step may include allocating, by the coordinating access point, resource units to determine a schedule of temporally ordered transmission opportunities for transmitting data. According to embodiments, this step may include an extended trigger frame format sent from the coordinating access point to stations which elicits stations to transmit traffic. According to further embodiments, this step may include transmitting a trigger frame sent from the coordinating to at least one station in order to elicit the least one station to initiate at least one uplink data transmission using at least one scheduled resource unit. According to embodiments, an extended trigger frame format may be used.
- the allocation of resource units is being prioritized according to the one or more priority identifiers. According to embodiments, this step may include the trigger frame reporting an uplink requirement from a station may include one or more priority identifiers assigned to one or more portions of the data. According to further embodiments, this step may include an extended trigger frame format sent from the coordinating access point to stations which elicits connected stations to transmit traffic with specific characteristics, including a priority / Traffic Identifier (TID). According to embodiments, this step may include combining different priority-based scheduling mechanisms, including Time Division Multiple Access (TDMA) and/or Strict Priority (SP) in Wi-Fi to support different traffic priorities as transmitted within the converged network.

The following section describes the function of trigger frames in UL-OFDMA and their use and modifications by the preferred embodiments. Pending IEEE wireless standard mandate both uplink OFDMA (UL-OFDMA) and downlink OFDMA (DL-OFDMA). UL-OFDMA allows an access point to simultaneously receive data from multiple clients while DL-OFDMA enables it to send information to multiple clients. Trigger Frames in the uplink direction of ODMA, UL-OFDMA, are amongst other things used by the access point to
- request control information from stations (e.g., using a trigger frame entitled BSRP or Buffer Status Report Poll); or;
- control uplink data transmissions by triggering stations at a given point in time and allocating a specific Resource Unit (RU) to a station (e.g., using a trigger frame entitled Basic Trigger Frame).

Some embodiments as proposed hereinafter propose extending the usage of the Basic Trigger Frame by adding additional information to this Basic Trigger Frame, which will be accordingly referred to as Extended Basic Trigger Frame. Additional information may include of traffic types being allowed in the upcoming transmission. These traffic types may be expressed by priority identifiers assigned to one or more portions of the data to be transmitted, e.g. a priority value or a Traffic Identifier (TID). Priority identifiers may seclusively allow traffic with a given priority and/or TID to be transmitted in the upcoming UL Data transmission. In IEEE 802.11 networks, the priority value may be based on the TID. Embodiments extended by a usage of a TID may allow priority-based scheduling mechanisms in OFDMA-capable Wi-Fi.

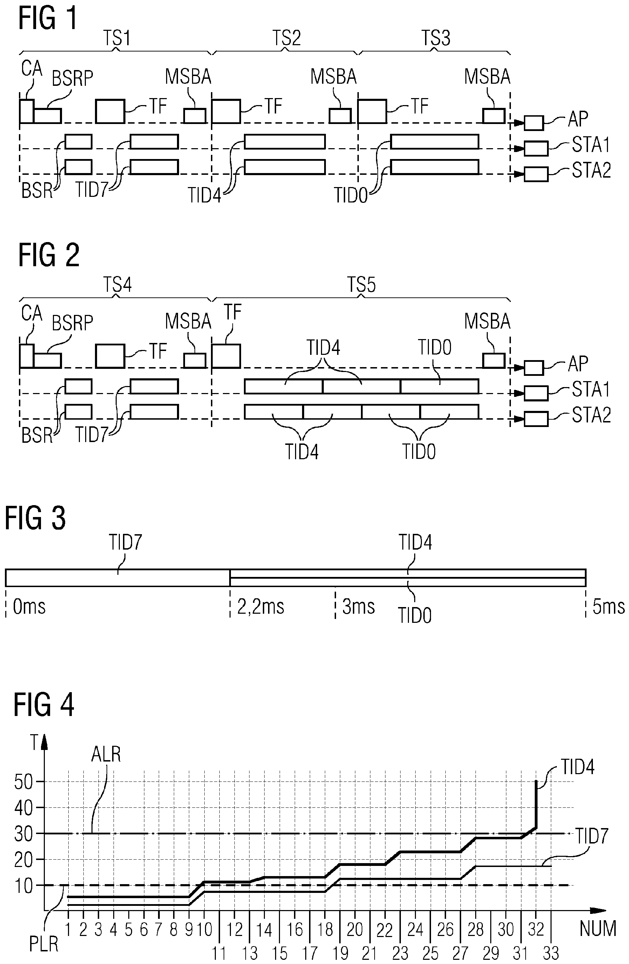

In FIG. 1 a schematic diagram illustrating a scheduling mechanism in a temporal representation is shown. The figure shows three dashed lines along an imaginary time axis that progresses from left to right, in which transmissions of frames or data frames are shown as rectangles. These transmissions involve an access point AP and a station STA1, STA2 that is communicatively and administratively associated with the access point. Perpendicular to the horizontal time axis, individual time slots TS1, TS2, TS3 are drawn dividing the horizontally progressing time into a first time slot TS1, a first time slot TS2 and a third time slot TS3 which will be discussed in more detail below.

In general, there are three types of frames in Wi-Fi:
- Management Frames which may be exchanged e.g. for onboarding devices to an access point;
- Control Frames which may be used to coordinate data transfers. Trigger Frames (e.g. the BSRP, the Basic Trigger Frame etc. as used herein) may also be categorized as belonging to a type of Control Frame;
- Data Frames, which may be used for transmitting data, e.g. using Physical Protocol Data Units (PPDU) or MAC Protocol Data Units (PPDU).

The scheduling mechanism as shown in FIG. 1 assumes a TDMA configuration, whereby a sequence or timing of this schedule as shown may have been implemented at the access point. The implementation may have been defined and/or loaded by a user or automatically by a network management tool. In the following the schedule is explained on the basis of frames or data frames exchanged over time, which are graphically shown from left to right.

After having won channel access CA, the access point AP may send a data frame or trigger frame entitled Buffer Status Report Poll BSRP to stations STA1, STA2. A main task of the Buffer Status Report Poll BSRP is to query the stations STA1, STA2 for their buffered data, including length of payload and Quality of Service or QoS requirements.

In response, the stations STA1, STA2 respectively may send their requirements, including, for example, payload size and the TIDs of buffered traffic, using a frame entitled Buffer Status Report BSR which is respectively sent from each station STA1, STA2 to the access point AP. The Buffer Status Report BSR is hereinafter commonly referred to as a frame in order to distinguish the Buffer Status Report BSR from a Control Frame and/or a Data Frame according to the above list of three types of frames in Wi-Fi. According to the Wi-Fi specifications, the Buffer Status Report BSR may be a Control Frame (as a response to a BSRP trigger frame) or may itself be a part of a Data Frame. In order to appreciate both technical characters, the Buffer Status Report BSR is hereinafter referred to in a general form as a frame.

Reporting the buffer status of the stations STA1, STA2 by a frame generally allows two variants according to the Wi-Fi specifications. According to an explicit variant, a Buffer Status Report Poll BSRP may request a transmission of a Buffer Status Report BSR which may comprise the buffer status of the stations STA1, STA2 as requested. According to an implicit variant, the buffer status of the stations STA1, STA2 may be reported without an explicit Buffer Status Report Poll BSRP. In this implicit variant, the buffer status of the stations STA1, STA2 may be attached to a Data Frame. In both variants, the buffer status of the stations STA1, STA2 may be reported by something which is generally referred to as a frame. While the explicit variant is illustrated in the drawing, the reader will appreciate that both, the explicit and/or the implicit variant may be used to put the described embodiments into practice.

Having processed the uplink buffer status reported by the Buffer Status Report BSR, the access point AP may determine an allocation of resource units based on the information received form the Buffer Status Reports BSR. After this allocation has been determined by the access point AP, said access point AP may send a data frame or trigger frame entitled Basic Trigger Frame TF to the stations STA1, STA2. Since the Basic Trigger Frame TF may be modified in a number of possible embodiments - some of which are explained further down below - in order to support the present embodiments, this Basic Trigger Frame TF is also referred to as Extended Basic Trigger Frame TF in the further description. The attribute »Extended« may thereby express that - although reference symbols of the trigger frames may be still used herein analogously to abbreviations as used in the Wi-Fi 6 / OFDMA literature - the inner data structure of data frames, including the Basic Trigger Frame TF, may be modified in order to provide additional scheduling information and/or to advantageously adapt embodiments even better to a particular use case.

The access point AP may send Extended Basic Trigger Frame TF to the respective stations STA1, STA2. This Extended Basic Trigger Frame TF may be scheduled for the first time slot TS1 in the cycle and may generally contain instructions to elicit one or more uplink data transmissions from a particularly determined station STA1, STA2 wherein the one or more uplink data transmission may be instructed to be organized in a schedule of temporally ordered uplink transmission opportunities being ordered or prioritized according to the one or more priority identifiers. As an example, according to the schedule as shown by FIG. 1, the Extended Basic Trigger Frame TF may contain instructions such as which station(s) are only allowed to transmit uplink data transmissions with a Traffic Identifier TID7 for Periodic Traffic being assigned to a high priority. Another task of the This Extended Basic Trigger Frame TF is to synchronize the starting points of the following uplink data or UL data transmission, as one of the requirements in OFDMA is that simultaneous data transmissions have to start and end at the same point in time.

Subsequently, the stations STA1, STA2 may transfer one or more scheduled resource unit or RU with Traffic Identifier TID7 for Periodic Traffic by a Physical Protocol Data Unit or PPDU the resource unit being shown in the drawing by an elongated rectangle.

After the transfer of the Physical Protocol Data Unit with Traffic Identifier TID7 has concluded, the access point AP may acknowledge the successful reception of one or more PPDUs by a Multi Station Block Acknowledgment MSBA which may mark the end of the periodic traffic in the current time slot TS1. In rare cases where the transmission over the wireless channel was not successful, the Multi Sation Block Acknowledgment MSBA may indicates a necessary retransmission in the alternative. Such retransmission may occur in an upcoming cycle or transmission opportunity, also referred to as TXOP.

Subsequently, another Extended Basic Trigger Frame TF may be transmitted by the access point AP in order to trigger a transmission of data traffic with a Traffic Identifier TID4 for Aperiodic Traffic by the stations STA 1 and STA 2 in the shared second time slot TS2. The two stations STA1, STA2 may transfer one or more scheduled resource units with Traffic Identifier TID4 for Aperiodic Traffic to the access point AP. At the end of the second time slot TS2, a Multi Station Block Acknowledgment MSBA may be sent from the access point AP to the stations STA1, STA2 in order to notify a successful transmission.

Subsequently, another Extended Basic Trigger Frame TF may be transmitted by the access point AP in order to trigger a transmission of data traffic with a Traffic Identifier TID0 for Best Effort Traffic by the stations STA 1 and STA 2 in the shared third time slot TS3. The two stations STA1, STA2 may transfer one or more scheduled resource units with Traffic Identifier TID0 for Best Effort Traffic to the access point AP. At the end of the third time slot TS3, a Multi Station Block Acknowledgment MSBA may be sent from the access point AP to the stations STA1, STA2 in order to notify a successful transmission.

According to this and other embodiments, three major traffic types are distinguished and handled: periodic deterministic traffic is mapped to a highest TID value 7, aperiodic deterministic traffic is mapped to a TID value 4, and best effort traffic / non-deterministic traffic is mapped to TID 0 as the lowest priority. A division into these classes follows requirements of industrial wireless communication which may be summarized as follows:
- A periodic deterministic communication is characterized in that a transmission interval is repeated periodically, bounded by a given threshold for the maximum latency and with high availability. This is used, for instance, in industrial automation in control-to-device, control-to-control, or motion control traffic, for example, with mobile robots, in machine cells, mobile control panels, or in process monitoring use cases.
- An aperiodic deterministic communication is characterized in that a transmission is, for instance, triggered by an event such as process, diagnostics, or maintenance events or alarms. The latency is bounded by a given threshold while high availability is usually required.
- A non-deterministic / best effort communication is characterized as being the least critical traffic type that has no strict requirements on latency or bandwidth.

A Transmission Opportunity or TXOP represents a wireless Time-Aware Shaper or TAS cycle being in temporal conformance with time slots TS1, TS2, TS3 as shown in FIG 1. Such a cycle or said Transmission Opportunity TXOP may be repeated periodically. The access point may trigger an OFDMA UL transmission sending a modified version of the Basic Trigger Frame at the beginning of each time slot TS1,TS2,TS3. An act of allocating a schedule of Resource Units RUs - or more precisely allocating a schedule of Resource Units to one or more specific stations STA1, STA2 - may span over one or more time slots TS1,TS2,TS3. The embodiments specifically propose to influence the allocation of resource units by prioritizing this allocation according to the one or more priority identifiers or TIDs.

While FIG. 1 shows a single-TID approach using a substantially pure TDMA-based scheduler using scheduled Trigger Frames optimized for periodic traffic, there may be cases where this emphasis on optimizing the periodic traffic comes at the expense of over-provisioning aperiodic traffic. In these cases, embodiments as described below may be applied to alleviate such overprovisioning.

FIG. 2 illustrates a scheduling mechanism in multi-TID scheduling approach using a scheduler that combines TDMA and Strict Priority scheduling to enable efficient bandwidth usage and worst-case bounds for converged traffic (i.e., periodic, aperiodic and best effort streams). In order avoid overprovisioning for aperiodic traffic (i.e., time slots that remain unused, as stations might not have buffered aperiodic frames or slots that might be too small for many aperiodic frames), a scheduling strategy based on an Extended Basic Trigger Frame TF format is proposed which combines pure TDMA scheduling with Strict Priority scheduling.

While the schedule as shown in FIG. 2 retains the concept of the previous embodiment as shown in FIG. 1 in that a separate time slot for periodic-deterministic traffic is reserved - see fourth time slot TS4 of FIG. 2 - this embodiment as shown in FIG. 2 differs from the embodiment as disclosed above in that aperiodic and best effort traffic are not separated into two slots. Instead, the slots for aperiodic and best effort traffic are merged in one fifth time slot TS5 shown in Figure 2.

Aperiodic and best effort traffic are scheduled using a strict priority schedule. The strict priority schedule means that once aperiodic traffic is present, it will always be transmitted before best effort traffic. In rare conditions, where aperiodic consumes all available bandwidth in a shared time slot, best effort traffic frames may be delayed or dropped. Dropped or delayed frames are not critical as best effort traffic has no guarantees and is considered the least important traffic type. Accordingly, this embodiment may provide an appropriate balance between handling periodic traffic by time-triggered scheduling in fixed slots while maintaining efficient bandwidth utilization for aperiodic and best effort traffic.

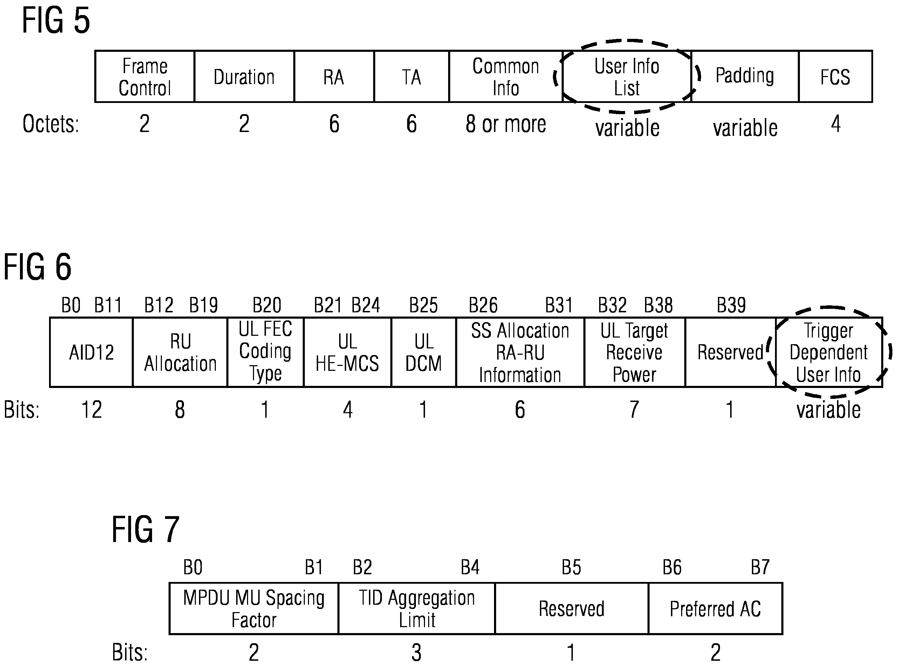

FIG. 5 illustrates relevant parts of a Trigger frame (TF) format as illustrated in Figure 9-64a and disclosed in Section 9.3.1.22 of a standard document entitled »IEEE 802.1 1ax« and published in 2021 by the IEEE Computer Society.

The TF format contains a User Info list which is highlighted in FIG. 5 by a dashed ellipse. This User Info List contains 0 or more User Info fields according to Figure 9-64d of said standard. A User info field format is accordingly illustrated in FIG. 6 of the drawing. Each User Info field structured in accordance with FIG. 6 represents control information for a specific station including a Trigger Dependent User Info subfield which is highlighted in FIG. 6 by a dashed ellipse.

Based on the trigger frame type, the Trigger Dependent User Info subfield may be different. FIG. 7 conforming to Figure 9-64g of said standard shows the Trigger Dependent User Info subfield format for a Basic Trigger frame TF.

According to an embodiment, it is proposed to extend the Trigger Dependent User Info subfield of the Basic Trigger frame TF by a Gate Control List or GCL field having a length of 8 Bits.

According to an embodiment, it is proposed to extend the Trigger Dependent User Info subfield of the Basic Trigger frame TF by the Gate Control List or GCL in such a way that a new field captioned »Gate Control List« or GCL is provided to extend the present Trigger Dependent User Info subfield as shown by FIG. 7. The new field captioned »Gate Control List« or GCL is suggested to be positioned between the presently used field »TID Aggregation Limit« field having a length of 3 Bits and the presently used »Reserved« field having a length of 1 Bit, both the TID Aggregation Limit field and the Reserved field as shown in FIG. 7.

The newly proposed 8 bits Gate Control List is proposed in analogy to an existing Gate Control List defined by the Time-aware Shaper which is part of the 802.1 Time-sensitive Networking standards. This similar Gate Control List known from the 802.1 Time-sensitive Networking standards may also serve in the present environment to specify which of 8 priorities or TIDs are allowed to be transmitted in the data transmission following the Extended Basic Trigger frame, i.e. the Basic Trigger Frame extended by means of the embodiments as disclosed herein.

Each bit of the newly proposed 8 bits Gate Control List or GCL may encode a gate open or gate close state for a given priority or TID. For example, the bit vector 1000 0000 may correspond to an open gate for traffic with priority 7 and closed gates for priority 0 to 6. Accordingly, this bit vector may instruct an upcoming UL transmission to exclusively allow traffic with priority or TID 7 to be transmitted.

In an alternative embodiment to the Extended Basic Trigger frame format, a new Trigger Frame type may be defined which adds scheduling information to the Trigger Frame being suitable to accordingly elicit at least one next uplink data transmission by at least one scheduled resource unit in accordance with one of the embodiments proposed herein.

In order to demonstrate the improvement of the embodiments, the inventors have carried out a simulation, the structure and results of which are outlined below. The simulation uses an example topology consisting of one access point and two stations associated with the access point. All devices support OFDMA, i.e., Wi-Fi 6 and beyond, and the Extended Basic Trigger frame format according to the proposed embodiments. Industrial requirements have been assumed as summarized below:

| TID | Traffic Type | Max. Latency | Inter-arrival Time | Packet Size |
|---|---|---|---|---|
| 7 | Periodic deterministic | 10 ms | 10 ms | 1000 B |
| 4 | Aperiodic deterministic | 30 ms | 7.5 -12.5 ms | 500 B |
| 0 | Best Effort | | | 500 B |

For conducting the simulation, the following steps have been carried out:
1) The chosen TDMA configuration according to the schedule as shown in FIG. 3 is setup at the access point.
2) After winning Channel Access CA, the access point sends a Buffer Status Report Poll BSRP to the stations. In response, the stations send their requirements, including for example payload size and the TIDs of buffered traffic, using Buffer Status Reports BSR.
3) The access point then determines the resource unit or RU allocation based on the information received via the Buffer Status Reports BSR and sends an Extended Basic Trigger Frame TF to the stations. This Extended Basic Trigger Frame TF is scheduled for the first time slot in the cycle and contains the information, such as which station(s) are only allowed to transmit TID 7.
4) Stations STA 1 and STA 2 transmit their TID 7 UL PPDUs.
5) The access point acknowledges the successful reception of the TID 7 UL PPDUs by a Multi STA Block Acknowledge MSBA which marks the end of the periodic traffic in this time slot.
6) Another Extended Basic TF is transmitted by the access point to trigger the transmission of TID 4 and TID 0 traffic of STA 1 and STA 2 in the shared time slot.
7) The two stations send aggregated MPDUs with first TID 4 traffic at the beginning and at the end TID 0 traffic to the access point.
8) At the end of the slot, a Multi-STA Block ACK is sent from the access point to the stations to notify a successful transmission. In rare cases, retransmissions might be necessary, which will occur in the upcoming cycle or TXOP.

The effectiveness of the embodiments has been proven by a simulation using a discrete-event network simulator for internet systems entitled ns3. The inventors evaluated how many stations may be supported for periodic and aperiodic traffic to still fulfill the latency requirements according to the table shown above with the proposed scheduling concept and extended Trigger Frame formats. The configuration used to evaluate the combined scheduling approach is shown in FIG. 3.

In FIG. 4 a schematic diagram is illustrated showing a respective dependence of a worst-case uplink latency time T measured in milliseconds or ms as a function of the number NUM of stations in the case of an aperiodic priority - plotted by an upper bold curve - and a periodic priority - plotted by a lower curve - according to the combined scheduling approach (multi-TID approach). For illustrating the worst-case uplink latency time, a latency limit ALR acceptable for aperiodic traffic is represented by a dash-dotted line at a value of 30 ms, a latency limit PLR acceptable for periodic traffic is represented as a dashed line at a value of 10 ms.

Overall, the combined scheduling approach may support worst-case latencies of 10 ms (microseconds) for up to 18 stations for periodic deterministic traffic and worst-case latency of 30 ms for up to 31 stations for aperiodic deterministic traffic in a 20MHz channel.

In summary the proposed scheduling approach provides a schedule for periodic and aperiodic traffic enables an access point to presume a higher degree of control, allows more fine-grained scheduling or allocation of resources based on priorities or TIDs while still meeting strict latency requirements for periodic and aperiodic traffic using TDMA-based scheduling.

According to a further embodiment, a bandwidth usage for aperiodic traffic may optimized using a Strict Priority approach. The bandwidth usage is optimized by reducing bandwidth waste through overprovisioning.

Applying the proposed scheduling schemes based on the proposed extensions to the Trigger Frame format allows to schedule periodic deterministic and aperiodic deterministic traffic while still providing optimal bandwidth utilization for non-deterministic Best Effort traffic for cases where aperiodic deterministic traffic is not present. Simulation results demonstrate that periodic-deterministic traffic may be supported for 18 stations with a maximum latency of 10 ms and aperiodic-deterministic traffic may be supported for 31 stations with a maximum latency of 30 ms.

The resource allocation mechanism combines a Time-Division-Multiple-Access (TDMA) approach for periodic-deterministic traffic with a Strict Priority (SP) approach for aperiodic-deterministic traffic.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for providing a priority-based deterministic channel access in a wireless local area network including an access point (AP) and one or more stations (STA1,STA2), the access point (AP) at least temporarily occupying channel access for an Orthogonal Frequency Division Multiple Access transmission, the method including the steps of:
- receiving a frame (BSR) reporting an uplink requirement of data buffered by a station (STA1, STA2), the frame (BSR) including one or more priority identifier assigned to one or more portions of the data;
- allocating a schedule of resource units for transmitting the data, the allocation of resource units being prioritized according to the one or more priority identifier; and;
- transmitting a trigger frame (TF) to at least one station (STA1, STA2) to elicit at least one uplink data transmission by at least one scheduled resource unit.

2. The method according to claim 1 wherein the one or more priority identifier includes a traffic identifier or TID for allowing at least one uplink data transmission being categorized by at least one traffic identifier of a periodic deterministic traffic, an aperiodic deterministic traffic and a best effort traffic.

3. The method according to claim 2 wherein the uplink data transmission between said trigger frame and a consecutive trigger frame is assinged to one traffic identifier being common to all participating stations (STA1, STA2).

4. The method according to one of claim 2 and 3, wherein the schedule of temporally ordered transmission opportunities for transmitting the data is ordered by the traffic identifier.

5. The method according to one of claim 2 to 4 wherein the schedule of temporally ordered transmission opportunities is prioritized for the uplink data transmission being categorized by the traffic identifier of a periodic deterministic traffic.

6. The method according to one of the preceding claims, wherein the schedule of temporally ordered transmission opportunities for transmitting the data is based on a TDMA schedule.

7. The method according to claim 6, wherein the schedule of temporally ordered transmission opportunities for transmitting the data is based on a TDMA schedule combined with Strict Priority schedule for aperiodic-deterministic traffic.

8. The method according to one of the preceding claims, wherein the trigger frame (TF) is a Basic Trigger Frame including a trigger dependent user info subfield being extended to encode a gate open state and/or a gate close state for one or more priority identifier.

9. An access node (AP) of a wireless local area network comprising a processor and a memory, operative to perform a method according to one of the preceding claims.
